# FASCICULE DE BREVET EUROPEEN

(11) **EP 0 437 397 B1**
(45) Date de publication et mention de la délivrance du brevet: **14.04.1993**
(21) Numéro de dépôt: 91400036.9
(22) Date de dépôt: 10.01.1991
(51) Int. Cl.: G01P 15/10, G01P 1/00

(54) **Accéléromètre différentiel à résonateurs piézoélectriques**
Differenzbeschleunigungsmesser mit piezoelektrischen Schwingelementen
Piezoelectric differential vibrating accelerometer

(30) Priorité: 11.01.1990 FR 9000252
(43) Date de publication de la demande: 17.07.1991
(73) Titulaire: ETAT FRANCAIS Représenté par le délégué général pour l'armement, F-00460 Armées (FR)
(72) Inventeur: Besson, Raymond, F-25000 Besançon (FR); Bourquin, Roger, F-25000 Besançon (FR); Dulmet, Bernard, F-25000 Besançon (FR); Maître, Pierre, F-25000 Besançon (FR)

(56) Documents cités:
- WO-A-89/10567
- US-A- 3 060 748
- US-A- 3 479 536

## Description

La présente invention a pour objet un accéléromètre du type différentiel, monoaxial, à sortie de fréquence.

Parmi les accéléromètres couramment utilisés, il existe notamment les accéléromètres à sortie de tension et les accéléromètres à sortie en fréquence.

Dans le premier type la sortie en tension implique, pour de nombreuses applications, la présence d'un élément supplémentaire, par exemple une carte de conversion analogique-numérique (CAN), en aval de la sortie, pour assurer le traitement (numérisation, intégration ...) du signal de sortie de l'accéléromètre. Ce type d'accéléromètre ne permet donc pas, dans de nombreux cas, une exploitation directe du signal de sortie, d'où des coûts de traitement relativement élevés et surtout une fiabilité très relative.

Dans un exemple connu d'accéléromètre à sortie de fréquence, dit VBA ("Vibrating Beam Accelerometer"), l'élément sensible se présente sous la forme d'un double diapason dont les bras vibrent en flexion sous l'effet de contraintes de traction-compression comme dans WO-A-89/10567.

Cependant, dans cet exemple, le barreau sensible est difficile à réaliser, et de plus, il peut présenter des problèmes de stabilité temporelle et de sensibilité dûs à sa géométrie. En effet, les zones sensibles sont de petite taille et isolées les unes des autres si bien qu'elles peuvent réagir différemment en fonction de la température.

La présente invention a pour but de remédier aux inconvénients précités et de réaliser un accéléromètre du type différentiel, à sortie de fréquence, qui soit de réalisation simple, fiable et qui minimise les différences de sensibilité entre les zones sensibles.

La présente invention a notamment pour objet de fournir un accéléromètre dans lequel les sensibilités thermiques des résonateurs n'ont pas d'effet sur son signal de sortie.

De plus, l'invention vise a réaliser un accéléromètre dans lequel la sensibilité est augmentée de façon sélective selon un axe privilégié de vibration.

Ces buts sont atteints grâce à un accéléromètre du type décrit plus haut, caractérisé en ce qu'il comporte, conformément à l'invention, une plaque sensible piézo-électrique monobloc mince dans le plan de laquelle est situé un axe sensible X, en ce que la plaque comporte deux fentes rectilignes parallèles à l'axe sensible X et définissant entre elles deux zones de vibration sur des modes de cisaillement d'épaisseur, alignées selon l'axe sensible et identiquement sensibles aux variations de température, les zones de vibration étant chacunes comprises entre deux électrodes pour former des résonateurs dont les sensibilités s'ajoutent pour une accélération orientée selon l'axe sensible et dont les sensibilités se retranchent pour une accélération orientée dans un plan perpendiculaire à cet axe et en ce que les résonateurs sont insérés dans les circuits de deux oscillateurs dont le battement constitue le signal de sortie de l'accéléromètre différentiel.

Avantageusement, l'accéléromètre selon l'invention comprend en outre des première et seconde masses sismiques rendues solidaires respectivement des première et seconde faces principales de la plaque en des zones distinctes des zones de vibration.

Selon une caractéristique prticulière, les masses sismiques sont réalisées en un matériau dont le coefficient de dilatation thermique est le même que celui de la plaque sensible .

Selon l'un des modes de réalisation de l'invention, la plaque sensible est fixée rigidement à sa partie centrale sur un moyen de support, et les masses sismiques sont en appui sur la plaque, à la périphérie de celle-ci.

Selon un autre mode de réalisation de l'invention, la plaque sensible est fixée rigidement sur un moyen de support dans sa partie périphérique, et les masses sismiques sont en appui dans la zone centrale de la plaque.

De façon préférentielle, les masses sismiques et la plaque sensible sont en quartz.

Avantageusement, l'accéléromètre comprend en outre des première et seconde lames flexibles disposées parallèlement dans des plans perpendiculaires audit axe sensible X et fixées chacune d'une part à l'une de leurs extrémités à un moyen de support et d'autre part à leur deuxième extrémité à au moins l'une desdites masses sismiques, lesdites lames flexibles étant disposées de part et d'autre de la plaque sensible et servant à limiter le déplacement des masses sismiques dans la seule direction de l'axe sensible.

L'accéléromètre selon l'invention peut comporter un ensemble électronique comprenant des premier et second oscillateurs associés à chacun des résonateurs, un circuit de régulation de tension, un circuit d'ajustement de la sensibilité thermique des oscillateurs, un mélangeur situé en sortie des oscillateurs et un circuit d'amplification de puissance dont l'entrée reçoit ledit signal de sortie du mélangeur.

D'autres caractéristiques et avantages de la présente invention ressortiront mieux à la lecture de la description qui va suivre, faite en référence aux dessins annexés sur lesquels:
- la figure 1 représente une coupe, selon le plan I-I de la figure 3, d'un accéléromètre selon un premier mode de réalisation de l'invention,
- la figure 2 est une coupe de l'accéléromètre de la figure 1, prise selon le plan II-II de la figure 3,
- la figure 3 est une demi-coupe partielle selon la ligne III-III de la figure 1, montrant en outre l'ensemble de la plaque sensible de l'accéléromètre en vue de dessus,
- la figure 4 montre une coupe transversale selon le plan IV-IV de la figure 6 d'un accéléromètre selon un second mode de réalisation de l'invention,
- la figure 5 est une coupe de l'accéléromètre prise selon le plan V-V de la figure 6,
- la figure 6 est une demi-coupe partielle selon la ligne VI-VI de la figure 4 montrant en outre l'ensemble de la plaque sensible de l'accéléromètre en vue de dessus,
- la figure 7 est une vue schématique en perspective montrant une partie de l'accéléromètre des figures 1 à 3, et
- la figure 8 est un schéma électronique des circuits utilisés dans l'accéléromètre selon l'invention.

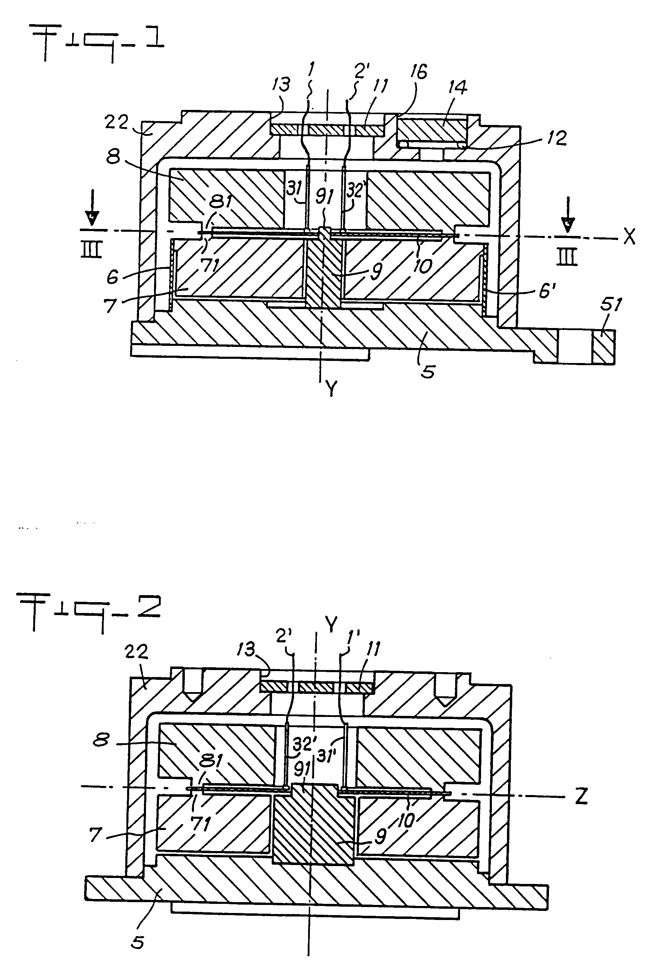

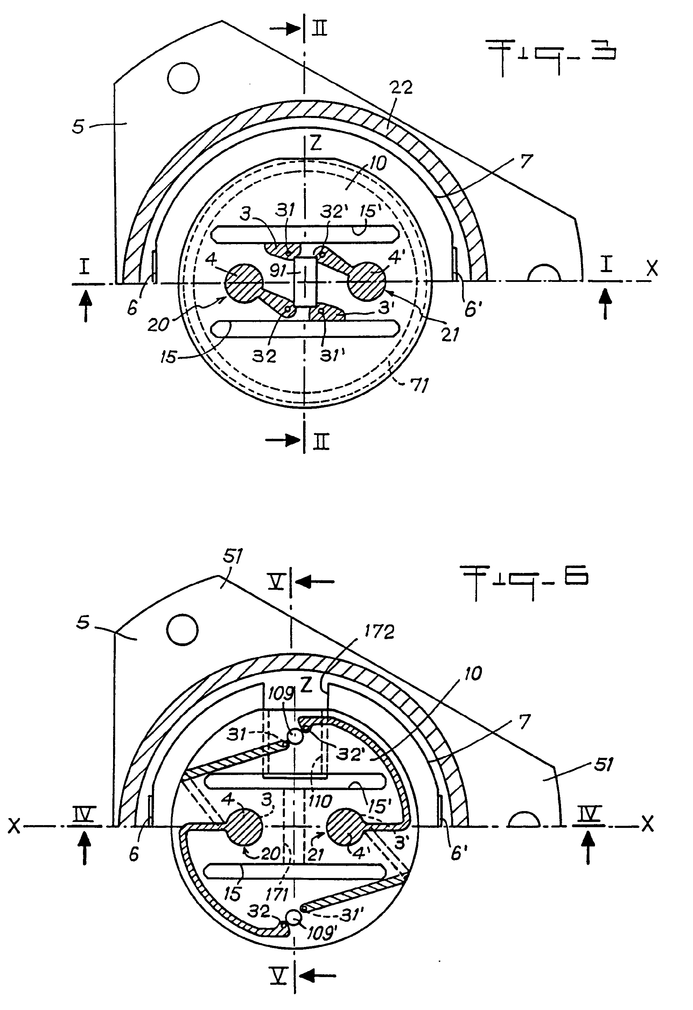

Les figures 1 et 2 représentent respectivement selon deux plans perpendiculaires entre eux la partie sensible d'un accéléromètre selon un premier mode de réalisation de l'invention. L'élément sensible est une plaque mince 10 en un matériau piézoélectrique. Cette plaque 10 est encastrée en sa partie centrale sur la partie supérieure 91 d'un pied 9 lui-même fixé dans une embase 5 munie de pattes ou brides de fixation 51. En partie périphérique, la plaque sensible est pincée entre deux masses sismiques 7 et 8 qui, dans ce mode de réalisation, sont quasi-cylindriques et réalisées en un matériau piézoélectrique tel que le quartz.

Par ailleurs, deux paires d'électrodes 3, 4 et 3', 4' sont déposées sur les faces principales supérieure et inférieure de la plaque sensible 10, et utilisées pour exciter le matériau piézoélectrique de la plaque sensible 10 dans des zones sensibles de détection d'accélération alignées selon un axe sensible X. Chaque paire d'électrodes 3, 4; 3' 4' est associée à une des zones sensibles de la plaque 10 pour former deux résonateurs 20, 21. Les électrodes 3, 3' sont formées sur la face inférieure de la plaque sensible 10 tandis que les électrodes 4, 4' sont formées sur la face supérieure de la plaque sensible 10.

Les diverses électrodes 3, 3', 4, 4' sont reliées par des chemins conducteurs à des tiges métalliques 31, 31', 32, 32' verticales disposées au-dessus de la plaque sensible 10 et prolongées par des fils de connexion 1, 1', 2, 2', par exemple en nickel, qui présentent de petites spires à leur extrémité inférieure en contact avec les tiges conductrices 31, 31', 32, 32' (Fig 7) afin d'éviter que des contraintes parasites soient exercées au niveau des tiges conductrices 31, 31', 32, 32' et donc de la plaque sensible 10. Comme on peut le voir sur la figure 7, des retours de métallisation formés sur le chant de la plaque sensible 10 au niveau des fentes rectilignes 15, 15' permettent d'assurer la continuité des chemins métalliques entre les électrodes inférieures 3, 3' et les tiges de connexion correspondantes 31, 31'.

Les fils de connexion 1, 1', 2, 2' traversent une plaque isolante 11 d'obturation d'un passage 13 formé à la partie supérieure du capot 22, lui-même placé sur l'embase 5. Le capot 22 coiffe l'ensemble de la plaque sensible 10 et des masses sismiques 7, 8 en ménageant un espace libre autour de cet ensemble sensible 10, 7, 8. Accessoirement, un orifice supplémentaire 16 peut être formé dans la partie supérieure du capot 22 pour faire le vide à l'intérieur de la chambre définie par le capot 22 et l'embase 5. Un bouchon 14 et un joint 12 assurent alors l'obturation de l'orifice 16.

Les masses sismiques 7, 8 sont destinées à créer des contraintes dans la plaque sensible 10 sous l'effet de l'accélération. Des contraintes distinctes sont créées dans chacun des résonateurs 20, 21 de sorte que leur fréquence de vibration est modifiée par suite des non linéarités de la loi de comportement mécanique du matériau piézoélectrique.

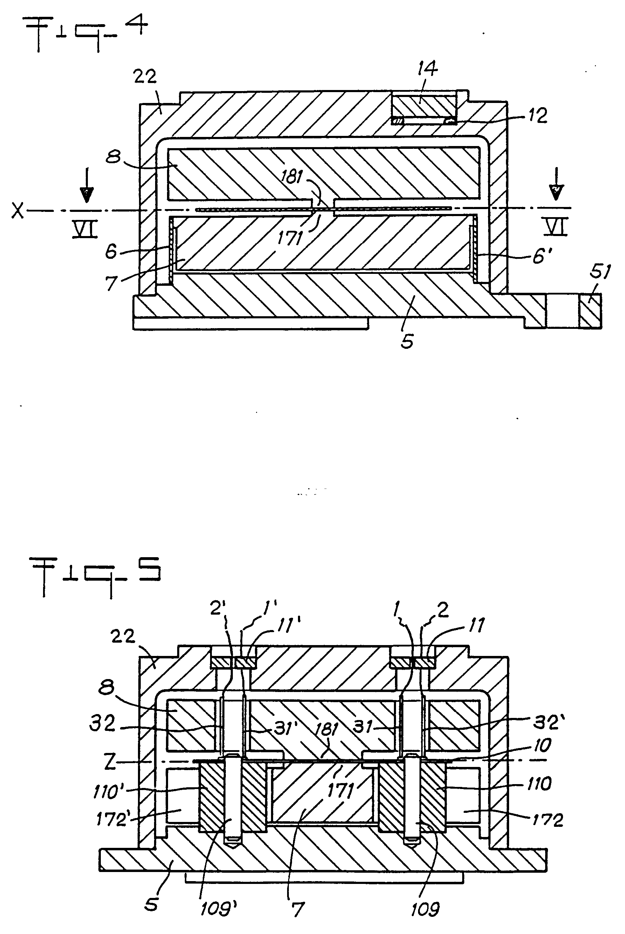

Dans le mode de réalisation des figures 1 à 3, les masses sismiques 7, 8 sont en contact avec la plaque sensible 10 par une zone périphérique étroite 71, 81. Les autres zones des faces des masses sismiques 7, 8 en regard de la plaque sensible 10 sont en retrait pour éviter des contacts entre la plaque 10 et les masses sismiques 7, 8 en dehors desdites zones périphériques 71, 81.

Dans l'exemple des figures 1 à 3, on a représenté des électrodes 3, 4, 3', 4' disposées directement sur la plaque sensible 10 de façon à définir des résonateurs à électrodes adhérentes. Toutefois, les électrodes 3, 4, 3', 4' pourraient aussi être formées sur les faces des masses sismiques situées en regard des faces principales de la plaque sensible 10 pour constituer les deux résonateurs 20, 21 qui seraient alors du type à électrodes non adhérentes.

Dans le mode de réalisation des figures 1 à 3, les deux zones indépendantes définies sur la plaque sensible 10 au sein des résonateurs 20, 21 sont entretenues en vibration grâce à l'effet piézoélectrique. Ces zones vibrent en hautes fréquences en cisaillement d'épaisseur, et sont isolées des zones périphériques en contact avec les parties 71, 81 des masses sismiques par les deux fentes rectilignes 15, 15' situées de part et d'autre des résonateurs en étant parallèles à l'axe sensible X de l'accéléromètre qui est de préférence constitué par l'axe cristallographique X du quartz.

Dans la mesure où les résonateurs 20, 21 sont taillés dans la même plaque piézoélectrique, l'orientation par rapport aux axes de symétrie des cristaux est la même pour chacun de ces résonateurs 20, 21. De ce fait, les sensibilités thermiques des résonateurs sont identiques et le signal de sortie du circuit électronique n'est pas perturbé par l'influence de la température.

Grâce à la disposition adoptée pour les résonateurs sur la même plaque sensible 10 selon l'axe sensible X, les sensibilités des résonateurs 20, 21 s'ajoutent pour une orientation donnée de l'accélération par rapport à la plaque c'est-à-dire pour une orientation parallèle a l'axe sensible, tandis qu'elles se retranchent pour une orientation perpendiculaire à la première orientation selon l'axe X.

D'une manière générale l'axe sensible X de la plaque 10 reste parallèle au plan de pose de l'embase 5.

Le centre de gravité des masses sismiques 7, 8 est avantageusement situé dans le plan de la plaque sensible 10.

Deux lames élastiques 6, 6', par exemple en quartz sont avantageusement prévues pour guider latéralement au moins une des masses sismiques 7, limitant ainsi le débattement de la masse dans la seule direction de l'axe sensible. Chacune des lames élastiques est fixée par une extrémité au support 5 et se trouve par son autre extrémité en appui sur la masse sismique.

Selon un mode de réalisation préféré de l'invention tous les composants qui viennent d'être cités sont en quartz sauf l'embase 5 qui peut être réalisée en acier inoxydable par exemple.

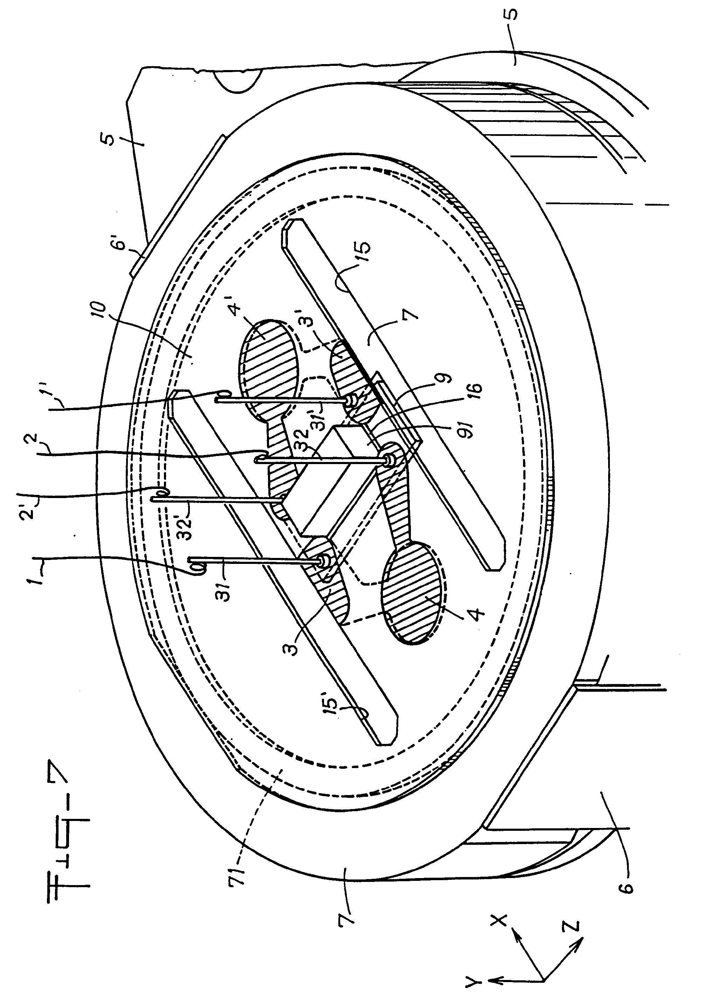

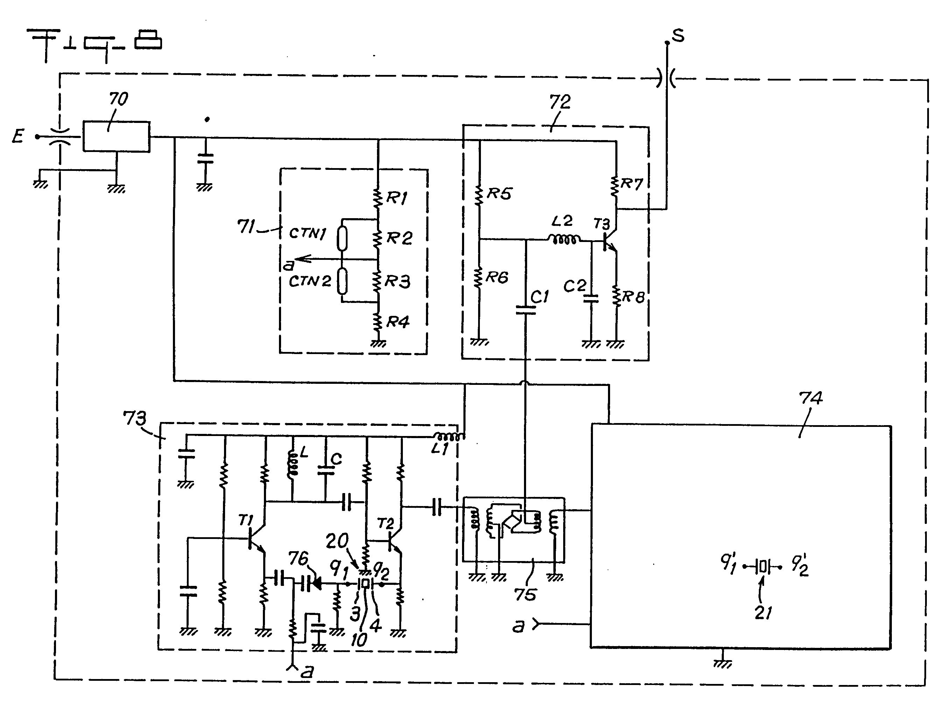

Les figures 4, 5 et 6 concernent un second mode de réalisation, pour lequel les mêmes éléments portent les mêmes références que dans le premier mode de réalisation des figures 1 à 3.

Seules les différences vis-à-vis du premier mode de réalisation seront discutées ici.

Ce second mode de réalisation diffère du premier essentiellement par la disposition des masses sismiques 7, 8 et du pied de support vis-à-vis de la plaque sensible. Dans cette réalisation, le contact des masses sismiques 7, 8 sur la plaque 10 a lieu au centre de la plaque 10 par des portions en saillie 171, 181 fixées sur la plaque 10, par exemple par collage, tandis que le support de la plaque 10 est effectué par deux pieds 110, 110' situés au voisinage de la périphérie de la plaque 10. Il est à noter que le support est ici constitué de deux parallélépipèdes 110, 110' entourant chacun une colonnette 109, 109' qui dépasse de la plaque 10. Des tiges conductrices verticales 31, 32'; 31', 32 sont fixées au plus près de chaque colonnette 109, 109' respectivement. Des chemins de métallisation assurent la connection électrique entre chaque tige conductrice 31, 31', 32, 32' et l'électrode associée 3, 3', 4, 4' superposée à l'une des zones sensibles des résonateurs 20, 21.

Les tiges métalliques 31, 32 et 31', 32' et les colonnettes 109, 109' sont placées sensiblement dans un plan qui est perpendiculaire à l'axe sensible X de la plaque 10, lequel plan contient le plan de symétrie des zones centrales 171, 172 d'appui des masses sismiques 7, 8 sur la plaque 10, et sépare les deux résonateurs 20, 21. Les tiges métalliques 31, 32, 31', 32' et les colonnettes 109, 109' sont par ailleurs situées à l'extérieur des fentes rectilignes 15, 15' parallèles à l'axe sensible X, par rapport aux zones centrales de la plaque 10 délimitées par les fentes rectilignes 15, 15'. Les moyens 109, 110; 109', 110' de support de la plaque 10 et les tiges de connexion 31, 32, 31', 32' ne peuvent ainsi pas avoir d'effet parasite sur les résonateurs 20, 21 dans la mesure où ils sont en contact avec des régions "dormantes" de la plaque sensible 10.

Comme dans le cas du mode de réalisation des figures 1 à 3, des lames élastiques 6, 6' perpendiculaires à l'axe sensible X peuvent être disposées entre au moins l'une des masses sismiques, telle que la masse sismique inférieure 7, et l'embase 5. Les lames élastiques sont fixées à leur partie inférieure sur l'embase 5 au voisinage de deux extrémités opposées de la masse sismique 7. La partie supérieure des lames 6, 6' est elle-même fixée à la masse sismique.

La figure 8 représente un schéma électronique, en partie simplifié, des circuits utilisés dans l'accéléromètre selon l'invention.

Ces circuits font par exemple appel à une technologie hybride c'est-à-dire comprenant des composants montés en surface et des composants dits "en couche épaisse". La borne E d'alimentation de l'ensemble des circuits est reliée à une source extérieure de tension continue, par exemple de +8 V. Un régulateur de tension 70 relié à la borne d'alimentation E et à la masse délivre une tension régulée de par exemple 5 volts qui est appliquée à l'ensemble des circuits de la figure 8. Ces circuits comprennent des premier et second oscillateurs 73, 74, un circuit 71 d'ajustement de la sensibilité thermique des oscillateurs, et un circuit amplificateur 72, qui reçoit le signal de sortie de l'étage mélangeur 75 relié aux sorties des deux oscillateurs 73, 74.

Le circuit 71 d'ajustement de la sensibilité thermique des oscillateurs 73, 74 comprend à titre d'exemple quatre résistances en série R1, R2, R3, R4 connectées entre l'alimentation régulée et la masse et deux thermistances (composants à coefficient de température négatif) CTN1, CTN2 montées en parallèle sur les deux résistances intermédiaires R2, R3 pour assurer une compensation thermique. La sortie du circuit 71 sert à polariser des diodes à capacité variable 76 incorporées dans les oscillateurs 73, 74.

Chaque oscillateur 73, 74 présente la même configuration de sorte que l'on a représenté les éléments constitutifs du seul oscillateur 73. Les bornes q₁ , q₂ de l'oscillateur 73 sont connectées aux fils 1, 2 de liaison aux électrodes 3, 4 du résonateur 20 tandis que les bornes q'₁, q'₂ de l'oscillateur 74 sont connectées aux fils 1', 2' de liaison aux électrodes 3', 4' du résonateur 21. Les éléments d'entretien des oscillateurs inclus dans les oscillateurs 73, 74 sont constitués de façon classique à partir de deux transistors T1, T2, d'un circuit RLC formé a partir d'une inductance L et d'un condensateur C montés en parallèle, de résistances de polarisation, de condensateurs de liaison et de découplage. Une inductance L1 placée à l'entrée de l'alimentation de l'oscillateur 73 ou 74 à partir du régulateur de tension 70 assure un filtrage.

La sortie de chaque oscillateur 73, 74, entre dans un mélangeur 75 du type double équilibré, connu en soi, dont la sortie est reliée par un condensateur de liaison C1 à l'entrée du circuit amplificateur 72 qui présente lui-même une configuration classique à partir d'un transistor T3, de résistances de polarisation R5 à R8 et d'un filtre constitué à partir d'une inductance L2 et d'un condensateur C2. La sortie S de l'amplificateur 72 constitue la sortie générale du circuit électronique, et délivre directement la fréquence de battement des deux oscillateurs 73 et 74, qui constitue un signal facile à exploiter. A titre d'exemple non limitatif, le régulateur de tension 70 peut être un circuit 78 L05 de la Société Motorola et le mélangeur 75 peut être un circuit RSM-01 de la Société Minicircuits.

Les divers circuits électroniques de la figure 8 peuvent être disposés dans un boîtier cylindrique en acier inoxydable superposé ou juxtaposé sur le boîtier constitué du capot 22 et de l'embase 5 à l'intérieur duquel est placée la plaque sensible 10.

A titre d'exemple, le mode de réalisation des figures 1 à 3 dans lequel l'encastrement de la plaque sensible 10 par rapport à l'embase 5 de l'encapsulage 20, 5 se fait au centre et la solidarisation des masses sismiques 7, 8 avec la plaque 10 se fait à la périphérie permet l'obtention de sensibilités comprises par exemple entre 110 et 120 Hz/G avec des masses sismiques circulaires en quartz et des résonateurs à 39,9 MHz harmonique 5, les masses 7, 8 totalisant 15 g environ. La réalisation pratique des dispositifs peut combiner les usinages conventionnels (rodage, rectification) et l'usinage ultrasonore.

D'une manière générale, la plaque sensible 10 présente des dimensions adaptées pour permettre des vibrations à une fréquence comprise entre 10 et 50 MHz.

## Revendications

1. Accéléromètre différentiel, monoaxial à sortie de fréquence, possédant des masses sismiques, un moyen de support et comportant une plaque sensible (10) piézoélectrique monobloc mince dans le plan de laquelle est situé un axe sensible (X) caractérisé en ce que la plaque comporte deux fentes rectilignes (15,15') parallèles à l'axe sensible (X) et définissant entre elles deux zones de vibration sur des modes de cisaillement d'épaisseur, alignées selon l'axe sensible et identiquement sensibles aux variations de température, les zones de vibration étant chacunes comprises entre deux électrodes (3,4; 3',4') pour former des résonateurs (20,21) dont les sensibilités s'ajoutent pour une accélération orientée selon l'axe sensible et dont les sensibilités se retranchent pour une accélération orientée dans un plan perpendiculaire à cet axe et en ce que les résonateurs sont insérés dans les circuits de deux oscillateurs (73,74) dont le battement constitue le signal de sortie de l'accéléromètre différentiel.

2. Accéléromètre selon la revendication 1, caractérisé en ce qu'il comprend en outre des première et seconde masses sismiques (7,8) rendues solidaires respectivement des première et seconde faces principales de la plaque en des zones distinctes des zones de vibration.

3. Accéléromètre selon la revendication 2, caractérisé en ce que les masses sismiques (7,8) sont réalisées en un matériau dont le coefficient de dilatation thermique est le même que celui de la plaque sensible (10).

4. Accéléromètre selon l'une quelconque des revendications 2 ou 3, caractérisé en ce que la plaque sensible (10) est fixée rigidement à sa partie centrale sur un moyen de support (9,5), et les masses sismiques (7,8) sont en appui sur la plaque, à la périphérie de celle-ci.

5. Accéléromètre selon l'une quelconque des revendications 1 à 3 , caractérisé en ce que la plaque sensible est fixée rigidement sur un moyen de support ( 9,9',5 ) dans sa partie périphérique , et les masses sismiques (7, 8) sont en appui dans la zone centrale de ladite plaque.

6. Accéléromètre selon l'une quelconque des revendications 2 à 5, caractérisé en ce qu'il comprend en outre des première et seconde lames flexibles (6, 6') disposées parallèlement dans des plans perpendiculaires audit axe sensible (X) et fixées chacune d'une part à l'une de leurs extrémités à un moyen de support (5) et d'autre part à leur deuxième extrémité à au moins l'une (7) desdites masses sismiques, lesdites lames flexibles (6, 6') étant disposées de part et d'autre de la plaque sensible (10) et servant à limiter le déplacement des masses sismiques dans la seule direction de l'axe sensible (X).

7. Accéléromètre selon l'une quelconque des revendications 2 à 6, caractérisé en ce que les masses sismiques (7, 8), la plaque (10), et le cas échéant les lames élastiques (6, 6') sont en quartz.

8. Accéléromètre selon l'une quelconque des revendications 2 à 7, caractérisé en ce que les masses sismiques (7, 8) ont une forme cylindrique.

9. Accéléromètre selon l'une quelconque des revendications 2 à 7, caractérisé en ce que les masses sismiques (7, 8) ont une forme parallèlépipédique.

10. Accéléromètre selon l'une quelconque des revendications 1 à 9, caractérisé en ce qu'il comprend un ensemble électronique comprenant des premier et second oscillateurs (73, 74) associés à chacun des résonateurs (20, 21), un circuit de régulation de tension (70), un circuit (71) d'ajustement de la sensibilité thermique des oscillateurs (73, 74), un mélangeur (75) situé en sortie des oscillateurs (73, 74) et un circuit (72) d'amplification dont l'entrée reçoit ledit signal de sortie du mélangeur (75).

## Patentansprüche

1. Einachsiger Differential-Beschleunigungsmesser mit Frequenzanzeige, der seismische Massen, eine Haltevorrichtung und eine dünne piezoelektrische Schwingungsplatte (10) aus einem Stück besitzt, in deren Ebene eine Schwingungsachse (X) liegt, und der dadurch gekennzeichnet ist, daß die Platte parallel zur Schwingungsachse (X) zwei gerade Schlitze (15, 15') aufweist, die durch ihren Zwischenraum entlang der Schwingungsachse zwei Schwingungszonen definieren, die durch unterschiedliche Materialstärken schwingen, mit identischer Empfindlichkeit für Temperaturschwankungen, wobei die Schwingungszonen jeweils zwischen zwei Elektroden (3, 4; 3', 4') liegen und Resonatoren (20, 21) bilden, deren Empfindlichkeiten bei einer Beschleunigung entlang der Schwingungsachse verstärkt, bzw. bei einer Beschleunigung, die senkrecht zu dieser Achse verläuft, vermindert werden, und wobei diese Resonatoren in die Schaltkreise der beiden Oszillatoren (73, 74) integriert sind, deren Schwebung das Ausgangssignal des Differential-Beschleunigungsmessers bildet.

2. Beschleunigungsmesser gemäß Patentanspruch 1, der dadurch gekennzeichnet ist, daß er außerdem noch eine erste und zweite seismische Masse (7, 8) besitzt, die jeweils mit der Ober- und Unterseite der Platte fest verbunden ist, und zwar an anderen Stellen als den Schwingungszonen.

3. Beschleunigungsmesser gemäß Patentanspruch 2, der dadurch gekennzeichnet ist, daß die seismischen Massen (7, 8) aus einem Material hergestellt werden, das denselben Wärmedehnungskoeffizienten aufweist wie die Schwingungsplatte (10).

4. Beschleunigungsmesser gemäß Patentanspruch 2 oder 3, der dadurch gekennzeichnet ist, daß das Zentrum der Schwingungsplatte (10) starr auf einer Haltevorrichtung (9, 5) befestigt ist und die seismischen Massen (7, 8) am Plattenrand aufliegen.

5. Beschleunigungsmesser gemäß Patentanspruch 1 bis 3, der dadurch gekennzeichnet ist, daß der Rand der Schwingungsplatte starr auf einer Haltevorrichtung (9, 9', 5) befestigt ist und die seismischen Massen (7, 8) im Zentrum der erwähnten Platte aufliegen.

6. Beschleunigungsmesser gemäß Patentanspruch 2 bis 5, der dadurch gekennzeichnet ist, daß er außerdem zwei biegsame Plättchen (6, 6') enthält, die auf einer senkrecht zur Schwingungsachse (X) gelegenen Ebene parallel angebracht sind und die jeweils mit einem Ende an einer Halterung (5) und mit dem anderen Ende an mindestens einer (7) der seismischen Massen befestigt sind, wobei diese biegsamen Plättchen (6, 6') beidseitig von der Schwingungsplatte (10) angebracht sind, und dazu dienen, die Bewegung der Massen ausschließlich auf die Richtung der Schwingungsachse (X) zu beschränken.

7. Beschleunigungsmesser gemäß Patentanspruch 2 bis 6, der dadurch gekennzeichnet ist, daß die seismischen Massen (7, 8), die Platte (10) sowie eventuell die biegsamen Plättchen (6, 6') aus Quarz sind.

8. Beschleunigungsmesser gemäß Patentanspruch 2 bis 7, der dadurch gekennzeichnet ist, daß die seismischen Massen (7, 8) zylinderförmig sind.

9. Beschleunigungsmesser gemäß Patentanspruch 2 bis 7, der dadurch gekennzeichnet ist, daß die seismischen Massen (7, 8) quaderförmig sind.

10. Beschleunigungsmesser gemäß Patentanspruch 1 bis 9, der dadurch gekennzeichnet ist, daß er eine elektronische Einheit besitzt, die aus einem ersten und zweiten Oszillator (73, 74) besteht, der jeweils mit einem der Resonatoren (20, 21), einem Spannungs-Regelkreis (70), einem Einstellkreis (71) für die Wärmeempfindlichkeit der Oszillatoren (73, 74), einem am Ausgang der Oszillatoren (73, 74) befindlichen Mischer (75) und einem Verstärkerkreis (72) verbunden ist, dessen Eingang das erwähnte Ausgangssignal des Mischers (75) empfängt.

## Claims

1. Monoaxial differential accelerometer with frequency output, having seismic masses, a supporting means and comprising a thin monobloc piezoelectric sensitive plate (10) in the plane of which is located a sensitive axis (X), characterized in that the plate comprises two rectilinear slits (15,15') parallel with the sensitive axis (X) and defining between them two vibrating zones on thickness shearing modes, aligned along the sensitive axis and identically sensitive to temperature variations, each vibrating zone located between two electrodes (3.4, 3', 4') to form resonators (20, 21) whose sensitivities are added for an acceleration directed along the sensitive axis and which sensitivities are deducted for an acceleration directed in a plane perpendicular to this axis and in that the resonators are inserted in the circuits of two oscillators (73, 74) whose beat constitutes the output signal of the differential accelerometer.

2. Accelerometer according to claim 1, characterized in that it includes moreover the first and second seismic masses (7, 8) made interdependent respectively from the first and second principal faces of the plate in zones distinct from the vibrating zones.

3. Accelerometer according to claim 2, characterized in that the seismic masses (7.8) are made of a material whose thermal dilatation coefficient is the the same as the thermal dilatation coefficient of the sensitive plate (10).

4. Accelerometer according to any of claims 2 or 3, characterized in that the central part of the sensitive plate (10) is fixed rigidly on a supporting means (9.5) , and the seismic masses (7.8) are resting against the plate, at the periphery of this latter.

5. Accelerometer according to any of claims 1 to 3, characterized in that the sensitive plate is fixed rigidly on a means of support (9, 9.5) in its peripheral part and the seismic masses (7, 8) are supported by the central zone of the aforementioned plate.

6. Accelerometer according to any of claims 2 to 5, characterized in that it includes moreover a first and second flexible blades (6, 6') arranged in parallel on planes perpendicular to the aforesaid sensitive axis (X) and each one being fixed on the one hand by one their ends to a supporting means (5) and on the other hand by their second end at at least one (7) of the aforesaid seismic masses, the aforementioned flexible blades (6, 6') being laid out on both sides of the sensitive plate (10) and being used to limit the displacement of the seismic masses only in the direction of the sensitive axis (X).

7. Accelerometer according to any of claims 2 to 6, characterized in that the seismic masses (7, 8) , the plate (10) , and if necessary the flexible blades (6, 6') are made of quartz.

8. Accelerometer according to any of claims 2 to 7, characterized in that the seismic masses (7, 8) are cylinder-shaped.

9. Accelerometer according to any of claims 2 to 7, characterized in that the seismic masses (7, 8) are paralleliped-shaped.

10. Accelerometer according to any of claims 1 to 9, characterized in that it includes an electronic unit including the first and second oscillators (73, 74) associated with each resonator (20, 21), a voltage regulating circuit (70), an adjusting circuit (71) of the thermal sensitivity of the oscillators (73, 74) , a mixer (75) located at the output of the oscillators (73, 74) and an amplifying circuit (72) whose input receives the aforementioned output signal of the mixer (75).
